# EUROPÄISCHE PATENTSCHRIFT

(11) **EP 0 759 353 B1**
(45) Veröffentlichungstag und Bekanntmachung des Hinweises auf die Patenterteilung: **08.03.2000**
(21) Anmeldenummer: 96113050.7
(22) Anmeldetag: 14.08.1996
(51) Int. Cl.: B29C 51/36, B29C 33/30, B29C 51/10

(54) **Verfahren zum Tiefziehen eines wannenförmigen Sanitärteils aus einem thermoplastisch verformbaren Kunststoff und Formkörper zur Durchführung des Verfahrens**
Method of deep drawing a bowl-shaped sanitary object made of thermoplastic material and mould for carrying out the method
Procédé d'emboutissage d'un élément sanitaire en matière thermoplastique en forme de cuvette et moule pour la réalisation du procédé

(30) Priorität: 22.08.1995 DE 19530799
(43) Veröffentlichungstag der Anmeldung: 26.02.1997
(73) Patentinhaber: HOESCH METALL + KUNSTSTOFFWERK GmbH & Co., 52372 Kreuzau-Schneidhausen (DE)
(72) Erfinder:
(74) Vertreter: Langmaack, Jürgen, Dipl.-Ing.

(56) Entgegenhaltungen:
- WO-A-88/07921
- DE-A- 4 117 766
- DE-A- 4 125 750
- DE-A- 4 434 683
- DE-C- 3 630 120
- US-A- 4 789 129

## Beschreibung

Die Erfindung betrifft ein Verfahren zur Herstellung von wannenförmigen Sanitärteilen gemäß dem Oberbegriff des Anspruchs 1 sowie einen Formkörper zur Durchführung des Verfahrens.

Die Herstellung von wannenförmigen Sanitärteilen, beispielsweise Duschwannen oder Badewannen erfolgt in der Weise, daß eine Platte oder Folie aus einem thermoplastisch verformbaren Kunststoff, insbesondere einem Sanitäracryl, erwärmt und dann durch Anlegen eines Unterdrucks in einen entsprechend wannenförmig ausgebildeten Formkörper eingezogen wird. Die hohe Duktilität der für die Herstellung von wannenförmigen Sanitärteilen verwendeten Kunststoffsorten, insbesondere der verwendeten Sanitäracryle, erlaubt eine große Gestaltungsfreiheit hinsichtlich der Formen, so daß es möglich ist, eine große Formenvielfalt derartiger wannenförmiger Sanitärteile herzustellen. Für die Herstellung werden vielfach Kunststoffplatten mit hochglänzender Oberfläche verwendet, wobei die hochglänzende Oberfläche auch nach dem Formvorgang die Gebrauchsseite des Sanitärteiles bildet. Die hohe Duktilität des verwendeten Kunststoffs hat jedoch zur Folge, daß selbst geringfügige Unebenheiten in der formenden Oberfläche des Formkörpers sich auch auf der beim Formvorgang an sich freiliegenden, die Gebrauchsseite bildenden Oberfläche durchformen und insbesondere bei hochglänzenden Oberflächen als Fehlerstellen sichtbar werden.

Bisher war es üblich, für jedes Modell eines Sanitärteils einen gesonderten Formkörper herzustellen. Dies war selbst dann erforderlich, wenn Teilbereiche der Form des herzustellenden Sanitärteils gleich blieben, wie beispielsweise der Trogteil, und nur bestimmte Teilbereiche in ihrer Formgebung abgewandelt wurden, wie beispielsweise der die Trogöffnung begrenzende Randteil. Wegen der hohen Duktilität des tiefzuziehenden Werkstoffs war es nicht möglich, den Formkörper zu teilen, da sich die entsprechenden Fugen zwischen den einzelnen Teilen des Formkörpers immer auf der Gebrauchsseite des hergestellten Sanitärteils abbildeten und bei hochglänzenden Oberflächen als Fehlstellen sichtbar sind. In der DE-C-36 30 120 ist zwar ein Formwerkzeug zur Herstellung von unterschiedlichen Badewannen angegeben, bei dem für alle Badewannen eine Querebene den Wannenraum und damit die Badewanne in einen Kopfteil und in einen Fußteil teilt. So ist damit beispielsweise möglich, für alle herzustellenden Badewannenmodelle identische Kopfteile einzusetzen und lediglich die Fußteile der einzelnen Badewannen unterschiedlich auszubilden. Ein derartiges Werkzeug ist jedoch nur zur Herstellung von Badewannen aus Stahlblech aus den vorstehend genannten Gründen einsetzbar.

Der Erfindung liegt die Aufgabe zugrunde, ein Verfahren zum Tiefziehen eines wannenförmigen Sanitärteils aus einer thermoplastisch verformbaren Kunststoffplatte zu schaffen, das einen einheitlich geformten offenen Trogteil, aber jeweils unterschiedlich geformte Randteile aufweist.

Diese Aufgabe wird gemäß der Erfindung dadurch gelöst, daß ein Formkörper vorgesehen ist mit einem Kernformelement zur Formung des Trogteils und einem damit auswechselbar verbundenen Randformelement zur Formung des Randteils und daß die Kunststoffplatte nach Erwärmung durch die Einwirkung eines Luftunterdrucks an die formenden Flächen des Formkörpers angeformt wird und hierbei über die zwischen den beiden Formelementen im Übergangsbereich zwischen Trogteil und Randteil verlaufenden Teilungsfugen gezogen wird. Ein derartiges Verfahren erlaubt es, Sanitärteile, insbesondere Badewannen, in einer Vielfalt von Modellformen herzustellen, wobei die einzelnen unterschiedlichen Modelle entweder einen einheitlichen Trogteil aufweisen, aber in ihrer äußeren Gestaltung jedoch hinsichtlich der Form des Randteils unterschiedlich sind. Es ist auch möglich, Modelle mit einem einheitlichen Randteil zu schaffen, bei denen der Trogteil hinsichtlich seiner Formgestaltung, beispielsweise der Gestaltung seiner Seitenwände oder seiner Bodenfläche unterschiedlich ausgeführt ist. Wird nun beim Tiefziehen die Kunststoffplatte über die Teilungsfuge zwischen den beiden Formelementen im Übergangsbereich zwischen dem Trogteil und dem Randteil des Sanitärteils gezogen, liegt die in der Regel nicht zu vermeidende Durchformung der Teilungsfuge zwischen dem Formelement auf der Gebrauchsseite am fertigen Sanitärelement in einem Bereich, in dem sie auch bei hochglänzenden Oberflächen praktisch nicht sichtbar ist. Der Verlauf der Teilungsfuge braucht hierbei nicht zwangsläufig geradlinig zu sein, sondern ist zweckmäßigerweise so gelegt, daß sie der Grundkontur des Kernformelementes im Übergangsbereich folgt, so daß weder die als durchgehende glatte Flächen sichtbaren Bereiche der Seitenwände des Trogteils einerseits noch die Bereiche des Randteils andererseits Unterbrechungen durch eine Abbildung der Teilungsfuge aufweisen. Die Abbildung der Teilungsfuge verläuft vielmehr in Bereichen zwischen Trogteil und Randteil, die ohnehin durch eine mehr oder weniger stark geformte Übergangskante geprägt sind. Besonders zweckmäßig ist es hierbei, wenn die Teilungsfuge noch in den den Seitenwänden des Trogteils zuzuordnenden Bereichen angeordnet ist. Zu diesen Bereichen gehören auch an steil verlaufenden Seitenwände des Trogteils anschließende weniger geneigt ausgebildete oder rinnenförmig ausgebildete Übergangsbereiche, an die sich dann der ebene oder auch gewölbte Randteil anschließt.

Die Erfindung wird anhand schematischer Zeichnungen von Ausführungsbeispielen näher erläutert. Es zeigen:
- Fig. 1: in einer Aufsicht unterschiedliche Wannenmodelle mit identischem Trogteil und jeweils abgewandeltem Randteil,
- Fig. 2: eine Aufsicht eines Wannenmodells in größerer Darstellung,
- Fig. 3: einen Vertikalschnitt gem. der Linie III-III in Fig. 2,
- Fig. 4: einen Teilschnitt durch den Übergangsbereich zwischen Randformelement und Kernformelement.

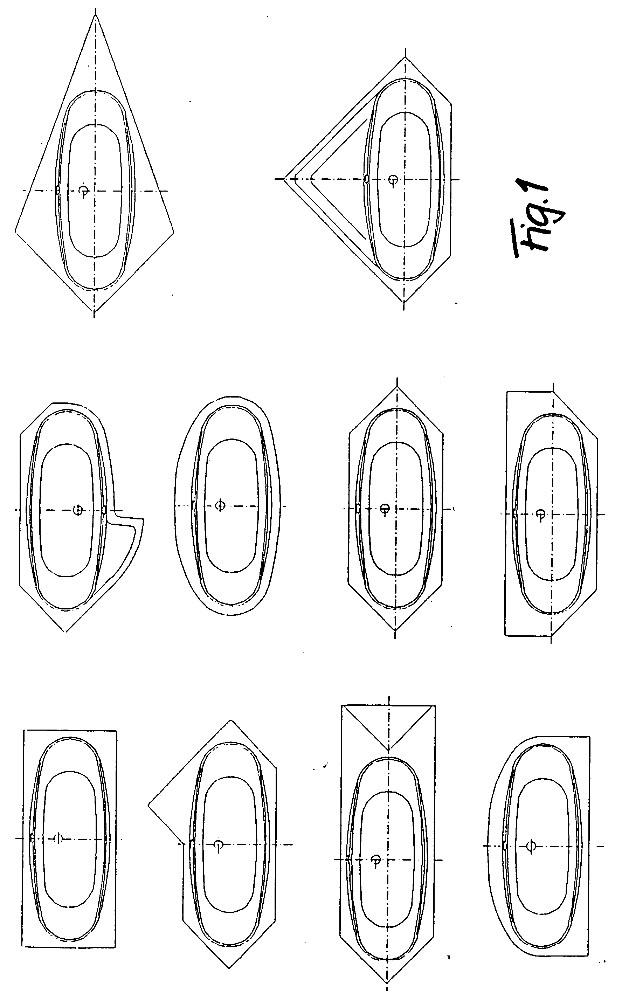

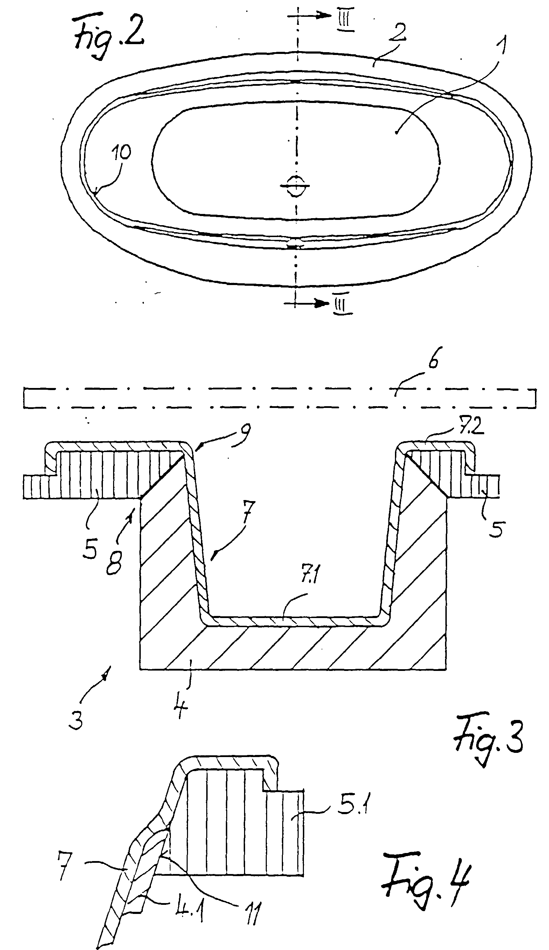

Die in Fig. 1 dargestellten unterschiedlichen Wannenmodelle weisen, wie in der größeren Darstellung gem. Fig. 2 ersichtlich, einen für alle Modelle identischen Trogteil 1 auf. Die Wannenmodelle unterscheiden sich lediglich durch die Form des sich an den Trogteil 1 anschließenden Randteils 2. Um nun eine derartigen Formenvielfalt herstellen zu können, war es bisher trotz der gleichbleibenden Ausformung des Trogteils 1 erforderlich, für jedes dieser Modelle einen eigenen Formkörper herzustellen.

Wie die Schnittdarstellung gem. Fig. 3 erkennen läßt, wird der Formkörper 3 in ein Kernformelement 4 zur Formung des Trogteils und ein Randformelement 5 zur Formung des Randteils unterteilt und so der Aufwand erheblich vermindert, zumal das Kernformelement wegen seines Volumens in der Herstellung kostenaufwendig ist, während das Randformelement im wesentlichen als ebene Platte viel einfacher zu fertigen ist.

Wie in Fig. 3 ist schematisch angedeutet, wird eine ebene Kunststoffplatte 6 aus einem thermoplastisch verformbaren Sanitäracryl erwärmt und durch Anlegen eines Luftunterdrucks in den Formkörper 3 nach Festlegung der Kunststoffplatte 6 an ihrem Rand eingezogen. Hierdurch wird ein wannenförmiges Sanitärteil 7, beispielsweise eine Badewanne geformt. Bei einem geteilten Formkörper, wie in Fig. 3 dargestellt, ist es nun wichtig, daß die Teilungsfuge 8 zwischen dem Kernformelement 4 zur Formung des Trogteils 7.1 und dem Randformelement 5 zur Formung des Randteils 7.2 in dem den Übergangsbereich 9 zwischen dem Trogteil 7.1 und dem Randteil 7.2 des Sanitärteils 7 zugeordneten Bereich angeordnet ist. Bei den hier dargestellten Wannenmodellen ist dies zweckmäßigerweise der Bereich der Kante 10 zwischen dem ebenflächigen Randteil 7.2 und den auslaufenden, die Trogöffnung bildenden Ränder des Trogteils 7.1. Die sich in der Regel nicht zu vermeidende Durchformung dieser Teilungsfuge durch den Kunststoff beim Tiefziehen verläuft dann im Kantenbereich 9. Je nach Gestaltung kann dieser Bereich, in dem sich die Teilungsfuge 8 "abbildet", auch noch durch eine entsprechende Gestaltung der aneinanderliegende Ränder von Kernformelement 4 und Randformelement 5 hervorgehoben werden, so daß hier eine deutlich sichtbare Nut oder Rille auf der Gebrauchsseite der fertigen Wanne entsteht, die als gestalterisches Element erkennbar ist, so daß die an sich unerwünschte "Abbildung" der Teilungsfuge 8 in dieser bewußt vorgesehenen Nut oder Rille "versteckt" ist.

In gleicher Weise ist es auch möglich, für eine vorgegebene Randkontur die Form des Trogteils zu variieren. So ist es beispielsweise möglich, für eine einheitliche Randkontur, die in bezug auf Anschlußmaße für andere Badezimmereinrichtungen fest vorgegeben sein soll, eine Wannenserie herzustellen, deren Trogteile normale Trogformen aufweisen, aber auch in Form von Wannen mit Armlehnen oder in Form einer Sitzbadewanne ausgebildet sein können. Entscheidend ist lediglich, daß der die Teilungsfuge aufnehmende Übergangsbereich des Randteils bei den verwendeten Kernformelementen identisch ist.

Wie in Fig. 4 dargestellt, kann die Anordnung auch so getroffen werden, daß das Randformelement 5.1 einen konischen Übergang 9 aufweist und daß das Kernformelement 4.1 mit einem entsprechend konisch ausgebildeten äußeren Paßrand 11 versehen ist, über dessen Innenkante sich beim Tiefziehen die Acrylplatte legt und eine deutliche Gestaltung im Übergangsbereich durch Form und Verlauf der Kontur des Paßrandes 11 ermöglicht.

## Patentansprüche

1. Verfahren zur Herstellung von wannenförmigen Sanitärteilen (7) aus einer thermoplastisch verformbaren Kunststoffplatte, mit einem offenen Trogteil (1; 7.1) und die Trogöffnung begrenzenden Randteilen (2; 7.2) mit unterschiedlichen geometrischen Gestaltungen, dadurch gekennzeichnet, daß ein Formkörper (3) vorgesehen ist mit einem Kernformelement (4) zur Formung des Trogteils (1; 7.1) und einem damit auswechselbar verbundenen Randformelement (5) zur Formung des Randteils (2; 7.2) und daß die Kunststoffplatte nach Erwärmung durch die Einwirkung eines Luftunterdrucks an die formenden Flächen des Formkörpers (3) angeformt wird und hierbei über die zwischen den beiden Formelementen (4, 5) im Übergangsbereich zwischen Trogteil (1; 7.1) und Randteil (2; 7.2) verlaufenden Teilungsfuge (8) gezogen wird.

2. Verfahren nach Anspruch 1, dadurch gekennzeichnet, daß die Teilungsfuge (8) beim Ziehen in die Kunststoffplatte durchgeformt wird.

3. Formkörper zur Durchführung des Verfahrens nach Anspruch 1 oder 2, mit einem Kernformelement (4) zur Formung eines Trogteils (7.1) und einem daran angesetzten Randformelement (5) zur Formung eines Randteils (7.2), das auswechselbar mit dem Kernformelement (4) verbunden ist, wobei die Teilungsfuge (8) zwischen den beiden Formelementen (4, 5) in dem dem Übergangsbereich (9) zwischen dem Trogteil (7.1) und dem Randteile (7.2) des Sanitärteils zugeordneten Bereich angeordnet ist.

## Revendications

1. Procédé pour la réalisation d'éléments sanitaires en forme de cuvette (7) à partir d'une plaque en matière plastique à déformation thermoplastique, comportant une partie ouverte en forme de cuvette (1; 7.1) et des parties rebords (2; 7.2) entourant l'ouverture de la cuvette ayant des formes géométriques variées, caractérisé en ce qu'il est prévu un moule de formage (3) avec un élément de formage sous forme de noyau (4) pour le formage de la partie cuvette (1; 7.1) et avec un élément de formage de rebord (5) pour la mise en forme de la partie rebord (2; 7.2) relié de manière interchangeable avec celui-ci et qu'après avoir été chauffée, la plaque en matière plastique est appliquée sur la surface de mise en forme du moule de formage (3) sous l'effet d'une dépression d'air et est ainsi étirée par-dessus le joint de séparation (8) disposé entre les deux éléments de formage (4, 5) dans la zone de transition entre la partie cuvette (1; 7.1) et la partie rebord (2; 7.2).

2. Procédé selon la revendication 1, caractérisé en ce que, lors de l'étirage, la formation du joint de séparation (8) est achevée dans la plaque en matière plastique.

3. Moule de formage pour la réalisation du procédé selon l'une des revendications 1 ou 2 comportant un élément de formage à noyau (4) pour le formage d'une partie cuvette (7.1) et un élément de formage de rebord (5) pour la mise en forme d'une partie rebord (7.2) qui y est appliqué et qui est relié de manière interchangeable à l'élément de formage à noyau (4), le joint de séparation (8) étant disposé entre les deux éléments de formage (4,5) dans la zone destinée à la zone de transition (9) entre la partie cuvette (7.1) et la partie rebord (7.2) de l'élément sanitaire.

## Claims

1. A process for the production of tub-shaped sanitaryware articles (7) from a thermoplastically deformable plastics sheet, with an open trough section (1; 7.1) and edge sections (2; 7.2) of different geometric configurations which define the trough opening, characterised in that a mould body (3) is provided with a core forming element (4) for forming the trough section (1; 7.1) and with an edge forming element (5) interchangeably connected thereto for forming the edge section (2; 7.2), and that the plastics sheet after heating is moulded on to the moulding surfaces of the moulded body (3) by the action of a partial vacuum and in so doing is drawn via the parting surface (8) extending between the two moulding elements (4, 5) in the region of transition between the trough section (1; 7.1) and the edge section (2; 7.2).

2. A process according to Claim 1, characterised in that the parting surface (8) upon drawing is formed through into the plastics sheet.

3. A mould body for performing the process according to Claim 1 or 2, with a core forming element (4) for forming a trough section (7.1) and an edge forming element (5) placed thereon for forming an edge section (7.2), which is interchangeably connected to the core forming element (4), wherein the parting surface (8) between the two forming elements (4, 5) is located in the region which is associated with the region of transition (9) between the trough section (7.1) and the edge section (7.2) of the sanitaryware article.
